# EUROPÄISCHE PATENTSCHRIFT

(11) **EP 2 350 154 B1**
(45) Veröffentlichungstag und Bekanntmachung des Hinweises auf die Patenterteilung: **19.09.2012**
(21) Anmeldenummer: 10740604.3
(22) Anmeldetag: 02.08.2010
(51) Int. Cl.: C08G 12/32, C08J 7/18, C09D 133/06, C09D 175/12

(54) **(METH)ACRYLIERTE MELAMIN-FORMALDEHYD-HARZE**
(METH)ACRYLATED MELAMINE FORMALDEHYDE RESINS
RÉSINES MÉLAMINE-FORMALDÉHYDE (MÉTH)ACRYLÉES

(30) Priorität: 05.08.2009 EP 09167273
(43) Veröffentlichungstag der Anmeldung: 03.08.2011
(73) Patentinhaber: BASF SE, 67056 Ludwigshafen (DE)
(72) Erfinder: SCHWALM, Reinhold, 67157 Wachenheim (DE); RÖSCH, Christine, 55276 Oppenheim (DE)
(86) Internationale Anmeldenummer: PCT/EP2010/061169
(87) Internationale Veröffentlichungsnummer: WO 2011/015539

(56) Entgegenhaltungen:
- EP-A1- 0 263 749
- WO-A1-2004/050888
- WO-A1-2008/022922
- WO-A1-2011/015539
- US-A1- 2010 291 640

## Beschreibung

Die vorliegende Erfindung betrifft (Meth)acrylgruppen-tragende Melamin-Formaldehyd-Harze, Verfahren zu deren Herstellung, deren Verwendung und solche enthaltende Beschichtungsmassen.

Pigmentierte Lacke und Klarlacke aus oder auf Basis von Melamin-Formaldehyd-Harzen sind seit einigen Jahrzehnten bekannt.

Nichtplastifizierte Melamin-Formaldehyd-Harze dienen entweder allein oder in Kombination mit weiteren chemisch verschiedenen Vernetzern, beispielsweise blockierten Polyisocyanaten, Trisalkylcarbamoyltriazinen (TACT) oder Epoxiden, als vernetzende Komponente in Bindemittelmischungen. Nach Härtung der Lackbestandteile erhält man eine Beschichtung, welche beständig ist gegen chemische, mechanische und witterungsbedingte Einflüsse. Plastifizierte Melamin-Formaldehyd-Harze können Modifizierungen mit Carbamatstrukturen, Abmischungen mit Polyestern oder Alkydharzen bzw. Vorkondensationen mit diesen, aufweisen. Nichtplastifizierte Melamin-Formaldehyd-Harze benötigen im Falle der Verwendung auf nicht formstabilen, flexiblen Beschichtungssubstraten eine äußere Elastifizierung, damit die Beschichtung nicht reißt; die Vernetzer als alleiniger Formulierungsbestandteil bildet lediglich spröde Netzwerke.

Melamin-Formaldehyd-Harze lassen sich nach Anwendungsgebieten (Formmassen, Leime, Tränkharze, Lacke), Alkylierungsstoffen (Veretherung mit Butanol, Methanol, Mischveretherung) oder wie hier aufgeführt nach dem Verhältnis aus Triazin : Formaldehyd : Veretherungsalkohol charakterisieren:
1. vollständig bis hoch methylolierte und vollalkylierte bis hochalkylierte Harze (HMMM-Typen)
2.1 teilmethylolierte und hochalkylierte Harze (High Imino Typen)
2.2. teilmethylolierte und teilalkylierte Harze (Methylol Typen)
3. niedrig methylolierte Harze (Melamin-Formaldehyd-Kondensate)

Die erste große Gruppe der vollständig veretherten Melamin-Formaldehyd-Harze, bei denen das sogenannte Einbaumolverhältnis Melamin:Formaldehyd:Alkohol theoretisch 1:6:6, in der Praxis in der Regel 1:>5,5:>5,0 und meist 1:>5,5:>4,0 beträgt, zeichnen sich durch ein ausgesprochen gutes High solids-Verhalten (relativ niedrige Viskosität bei hohem Feststoffgehalt) aus. Bei dieser Vernetzergruppe lässt sich der freie Formaldehyd leicht reduzieren. Derzeit erreichbar ist ein Gehalt an freiem Formaldehyd < 0,3 Gew%. Dabei enthalten die Handelsprodukte als Alkohol zumeist Methanol, es sind aber auch gemischtveretherte oder vollständig butylierte Typen bekannt.

Die vollständig veretherten Melamin-Formaldehyd-Harze werden in der Praxis bevorzugt in Beschichtungen von Gebinden (Can-Coating) und Metallbändern (Coil-Coatings) und für alle Schichten der Automobillackierung eingesetzt.

Die geringe thermische Reaktivität bei Einbrennbedingungen, wie 20 Minuten bei 140°C, erfordert für diese vollständig veretherten Melamin-Formaldehyd-Harze die Katalyse mit starken Säuren. Dadurch erhält man eine sehr schnelle Härtung, durch Umetherung mit dem Bindemittel unter Freisetzung der Veretherungsalkohole ein homogenes Conetzwerk. Mit dieser Katalyse mit starken Säuren sind sehr kurze Aushärtungszeiten, wie bei teilmethylolierten Melamin-Formaldehyd-Harzen möglich. Während der Vernetzung ist eine Formaldehydemission möglich, die deutlich über dem freien Formaldehyd liegt und in der Rückspaltung von Methylolgruppen begründet ist.

Die zweite große Gruppe der teilweise veretherten Melamin-Formaldehyd-Harze, die in der Praxis zumeist ein Einbaumolverhältnis Melamin:Formaldehyd:Alkohol von 1 : 3 bis 5,4 : 2 bis 4,3 zeichnen sich durch eine im Vergleich zur ersten Gruppe deutlich erhöhten thermischen Reaktivität ohne Säurekatalyse aus. Während der Produktion dieser Vernetzer findet eine Eigenkondensation statt, die zu einer höheren Viskosität (geringeres High solids-Verhalten) führt und dadurch die Entfernung des freien Formaldehyd bei der Destillation erschwert. Für diese Produkte sind ein Gehalt an freiem Formaldehyd von 0,5 bis 1,5% Standard, jedoch gibt es auch Produkte mit einem Gehaltan freiem Formaldehyd von 0,3 bis 3 Gew%. Auch hier sind als Handelsprodukte methylierte, butylierte sowie gemischt veretherte Typen weit verbreitet. Die Veretherung mit weiteren Alkylierungsstoffen ist in der Literatur beschrieben bzw. als spezielle Produkte erhältlich.

High-Imino- und Methylol-Typen als jeweilige Untergruppe weisen beide eine unvollständige Methylolierung, d.h. Formaldehyd-Einbaumolverhältnisse von weniger als 1 : 5,5, auf. Die High-Imino-Typen unterscheiden sich von den Methylol-Typen jedoch durch einen hohen Alkylierungsgrad, d.h. dem Anteil der veretherten Methylolgruppen an den eingebauten Formaldehyd-Äquivalenten, von meist bis zu 80 %, wohingegen die Methylol-Typen in der Regel < 70 % aufweisen.

Einsatzgebiete für die teilmethylolierten Melamin-Formaldehyd-Harze erstrecken sich über alle Anwendungsbereiche, auch in Kombination mit HMMM Typen zur Reaktivitätsanpassung, wo Härtungstemperaturen 100 bis 150°C gefordert sind. Eine zusätzliche Katalyse mit Hilfe schwacher Säuren ist möglich und gängige Praxis.

Neben der Reaktion des Aminoharzes mit dem Bindemittel findet ein deutlich erhöhter Anteil an Eigenvernetzung des Vernetzers mit sich selbst statt. Die Folge ist eine reduzierte Elastizität des Gesamtsystems, welche durch die geeignete Auswahl des Kombinationspartners ausgeglichen werden muss. Vorteilhaft dagegen ist die reduzierte Gesamtformaldehydemission aus den daraus hergestellten Beschichtungen.

Lackierungen auf Basis von Melamin-Formaldehyd-Kondensationsharzen werden in der Automobilbranche, für Industrielackierungen generell, aber auch für Holz und Kunststoff verwendet. Die Lacksysteme zeichnen sich durch besondere Härte, Glanz, Chemikalien- und Vergilbungsbeständigkeit sowie Wetterfestigkeit aus.

Es ist bekannt, Melamin-Formaldehyd-Harze mit carbamatgruppenhaltigen Polymeren umzusetzen, wie beispielsweise aus EP 738740 oder EP 675141.

Die darin beschriebenen Copolymerisate werden erhalten durch radikalische Polymerisierung von Acrylaten und Comonomeren, die eine Carbamatgruppe und eine (Meth)acrylgruppe enthalten und lassen sich dann in an sich bekannter Weise beispielsweise mit Aminoplasten, zu vernetzten Lackharzen umsetzen.

Die Herstellung solcher Comonomere, die eine Carbamatgruppe und eine (Meth)acrylgruppe tragen, ist beispielsweise bekannt aus WO 2004/050888 (entspricht US 7164037).

Durch ihre strukturelle Flexibilität sind Melamin-Formaldehyd-harze interessante Ausgangsverbindungen für strahlungshärtbare Verbindungen.

Bekannt sind Umsetzungsprodukte veretherter Melamine mit Hydroxyacrylaten für die Anwendung in strahlungshärtbaren Beschichtungsmassen, siehe z.B. T. J. Giacobbe et al., Macromolecules, 4, 1971, 630 ff. oder JP63286426.

Durch das Vorliegen von säurelabilen Formalen bzw. N,O-Acetalen sind derartige Strukturen jedoch im sauren pH-Bereich instabil, was sich beispielsweise in einer Labilität bei Feuchtigkeitseinwirkung zeigt (siehe unten).

US 4266053 beschreibt Melaminkerne enthaltende (Meth)acrylate, hergestellt als Umsetzungsprodukte von Melamin-basierten Polyolen mit (Meth)acrylsäure, für die Anwendung in UV härtenden Beschichtungen von u.a. Kunststoffteilen. Diese weisen zwar eine bessere Feuchtigkeitsfestigkeit auf, als die von T. J. Giacobbe et al. beschriebenen Verbindungen (siehe Vergleichsbeispiel 1 in Tabelle 1 der US 4266053), müssen dafür aber kompliziert auf Cyanurchlorid hergestellt werden.

Aufgabe der vorliegenden Erfindung war es, neue strahlungshärtbare Verbindungen auf Basis von Melamin-Formaldehyd-Harzen zur Verfügung zustellen, die über einen breiten pH-Bereich stabil gegen Rückspaltung und einfach herstellbar sind.

Die Aufgabe wurde gelöst durch strahlungshärtbare Verbindungen, erhältlich durch Umsetzung mindestens eines Melamin-Formaldehyd-Harzes mit mindestens einer Verbindung der Formel (I), 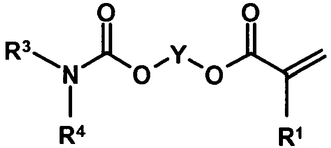 worin
R³, R⁴ unabhängig voneinander Wasserstoff, C₁-C₁₈-Alkyl, C₆-C₁₂-Aryl oder C5 - C₁₂-Cycloalkyl bedeuten,
Y ausgewählt ist unter 1,2-Ethylen, 1,2-Propylen, 1,1-Dimethyl-1,2-ethylen, 1-Hydroxy-methyl-1,2-ethylen, 2-Hydroxy-1,3-propylen, 1,3-Propylen, 1,4-Butylen, 1,6-Hexylen, 2-Methyl-1,3-Propylen, 2-Ethyl-1,3-Propylen, 2,2-Dimethyl-1,3-Propylen und 2,2-Dimethyl-1,4-butylen, oder 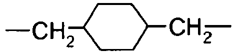 oder 1,2 -, 1,3- oder 1,4-Cyclohexylen,
R¹ Wasserstoff oder Methyl, bevorzugt Wasserstoff bedeutet,
mit der Maßgabe, daß mindestens einer der Reste R³ und R⁴ gleich Wasserstoff ist.

Die Herstellung der Verbindungen der Formel (I) kann bevorzugt erfolgen, indem man urethangruppenhaltige Alkohole (C) 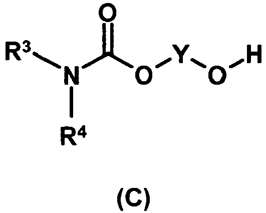 mit (Meth)acrylsäure verestert oder mit einem (Meth)acrylsäureester, bevorzugt einem (Meth)acrylsäurealkylester, besonders bevorzugt einem (Meth)acrylsäurealkylester, dessen Alkylrest 1 bis 8 Kohlenstoffatome aufweist, umestert.

Eine mögliche bevorzugte Herstellung solcher urethangruppenhaltiger Alkohole (C) ist beschrieben in WO 2004/050888, Seite 3, Zeile 26 bis Seite 7, Zeile 23 (entspricht US 7164037, Spalte 2, Zeile 56 bis Spalte 5, Zeile 33), was hiermit per Bezugnahme Bestandteil der vorliegenden Beschreibung sei.

Eine Möglichkeit der Herstellung der Verbindungen der Formel (I) ist beschrieben in WO 2004/050888, Seite 8, Zeile 7 bis Seite 11, Zeile 38 (entspricht US 7164037, Spalte 5, Zeile 57 bis Spalte 8, Zeile 34), was hiermit per Bezugnahme Bestandteil der vorliegenden Beschreibung sei, oder in der deutschen Patentanmeldung mit dem Aktenzeichen 102009003035.2 und dem Einreichedatum 12.5.2009 (entspricht der Internationalen Patentanmeldung mit dem Aktenzeichen PCT/EP2010/056079 und dem Anmeldedatum 5. Mai 2010 sowie der US-Patentanmeldung Ser.No. 12/776,670 und dem Anmeldedatum 10. Mai 2010).

Folgende Verbindungen der Formel (I) sind bevorzugt:
Bei Y handelt es sich bevorzugt um 1,2-Ethylen, 1,2-Propylen, 1,3-Propylen, besonders bevorzugt sind 1,2-Ethylen und 1,2-Propylen und ganz besonders bevorzugt ist 1,2-Propylen.

Beispiele für R³ und/oder R⁴ sind Wasserstoff, Methyl, Ethyl, iso-Propyl, n-Propyl, n-Butyl, iso-Butyl, sek-Butyl, tert-Butyl, n-Hexyl, n-Heptyl, n-Octyl, n-Decyl, n-Dodecyl, n-Tetradecyl, n-Hexadecyl, n-Octadecyl, n-Eicosyl, 2-Ethylhexyl, Cyclopentyl, Cyclohexyl, Cyclooctyl, Cyclododecyl, 2-Hydroxyethyl, 2-Hydroxypropyl, 1-Hydroxypropyl, 5-Hy droxy-3-oxa-pentyl, 8-Hydroxy-3,6-dioxa-octyl oder 11-Hydroxy-3,6,9-trioxa-undecyl.

Bevorzugt handelt es sich bei R³ und/oder R⁴ um Wasserstoff, Methyl, Ethyl, iso-Propyl, n-Butyl, tert-Butyl und Cyclohexyl, besonders bevorzugt um Wasserstoff, Methyl, Ethyl, n-Butyl und tert-Butyl, ganz besonders bevorzugt um Wasserstoff, Methyl oder Ethyl, insbesondere um Wasserstoff oder Methyl und speziell sind beide Reste Wasserstoff.

Bevorzugt sind die Alkohole (C) ausgewählt aus der Gruppe bestehend aus 2-Hydroxyethylcarbamat, 2-Hydroxy-1-propylcarbamat und 3-Hydroxy-2-propylcarbamat. Letztere werden bevorzugt als Isomerengemisch eingesetzt.

Unter einem Melamin-Formaldehyd-Harz wird im Rahmen der vorliegenden Schrift das Umsetzungprodukt aus Melamin, Formaldehyd sowie gegebenenfalls mindestens einem Alkohol verstanden, bevorzugt aus Melamin, Formaldehyd und einem oder zwei Alkanolen, besonders bevorzugt Melamin, Formaldehyd und einem Alkanol. Ganz besonders bevorzugt sind die Alkanole ausgewählt aus der Gruppe bestehend aus Methanol, Ethanol, n-Butanol, iso-Butanol und sekundär-Butanol, bevorzugt ausgewählt aus der Gruppe bestehend aus Methanol, n-Butanol und iso-Butanol, besonders bevorzugt handelt es sich um Methanol und/oder n-Butanol, ganz besonders bevorzugt um Methanol oder n-Butanol.

Bevorzugt handelt es sich bei dem Melamin-Formaldehyd-Harz um eine Verbindung der Formel

Mel-N₃ FA_{fA} R⁵_{mA} H_{6-fA}

aufweist,
worin
Mel-N₃ einen durch gedankliche Abstraktion der sechs an die Aminogruppen gebundenen Wasserstoffatome in Melamin entstehenden Melaminrest,
FA eine Gruppe -CH₂-O-,
R⁵ eine C₁ - C₈-Alkylgruppe bedeuten.

R⁵ bedeutet erfindungsgemäß eine oder mehrere verschiedene C₁ - C₈-Alkylgruppen, bevorzugt eine C₁ - C₄-Alkylgruppe, besonders bevorzugt eine Methyl-, Ethyl- oder Butylgruppe, ganz besonders bevorzugt eine Methylgruppe oder eine n-Butylgruppe, insbesondere eine Methylgruppe.

C₁ - C₈-Alkylgruppen sind beispielsweise Methyl-, Ethyl-, n-Propyl-, iso-Propyl-, n-Butyl-, iso-Butyl-, 2-Butyl-, tert.-Butyl-, 1-Pentyl, 2-Pentyl, iso-Amyl, n-Hexyl, n-Octyl oder 2-Ethylhexyl.

Unter C₁ - C₄-Alkyl wird in dieser Schrift Methyl-, Ethyl-, n-Propyl-, iso-Propyl-, n-Butyl-, iso-Butyl-, 2-Butyl-, oder tert.-Butyl- verstanden.

Unter Butanol wird im Rahmen dieser Schrift zusammenfassend n-Butanol, iso-Butanol, sek-Butanol und deren Gemische verstanden, bevorzugt n-Butanol oder iso-Butanol und besonders bevorzugt n-Butanol.

f_{A} kann beliebige Werte von 3,6 bis maximal 6,0 einnehmen. Bevorzugt ist f_{A} mindestens 4,1, besonders bevorzugt mindestens 4,2 und ganz besonders bevorzugt mindestens 5,0.

In der Regel nimmt f_{A} Werte von bevorzugt maximal 6,0, besonders bevorzugt nicht mehr als 5,8 an, ganz besonders bevorzugt nicht mehr als 5,6 und insbesondere nicht mehr als 5,4.

m_{A} kann aus einer prinzipiellen Betrachtung heraus nicht größer sein als f_{A}.

Beispielsweise nimmt m_{A} Werte von mindestens 2,0 an, bevorzugt mindestens 2,4, besonders bevorzugt mindestens 2,9 und ganz besonders bevorzugt mindestens 3,4.

In der Regel ist m_{A} nicht größer als 5,0, bevorzugt nicht größer als 4,9, besonders bevorzugt nicht größer als 4,8 und ganz besonders bevorzugt nicht größer als 4,7.

Die Formel Mel-N₃ FA_{fA} R⁵_{mA} H_{6-fA} gilt als Beschreibung in allgemeiner Form und wird berechnet aus den Harzanalysen ohne Berücksichtigung der gegebenenfalls vorhandenen Brückenbildungen durch Kondensation. Ausgehend von Gesamtstickstoff, bestimmt mittels Elementaranalyse, wird der Melamingehalt im Harzaufbau errechnet und als Mel-N₃ =1 normiert. Der eingebaute Formaldehyd wird als Gesamtformaldehyd (bestimmt nach saurem Aufschluß) abzüglich dem freien Formaldehyd (DIN 16746-A, Sulfit-Verfahren,) molar bezogen auf Melamin berechnet. Dies ist die Zahl f_{A}. Der eingebaute Alkohol wird bestimmt aus Differenz des Gesamtalkoholgehalts laut Gaschromatographie nach saurem Aufschluss und des Gehalts an freiem Alkohol laut Gaschromatographie molar bezogen auf Melamin.

Im eingesetzten Melamin-Formaldehyd-Harz sind in einer bevorzugten Ausführungsform der vorliegenden Erfindung von den im Molekül enthaltenen, durch Formaldehyd eingebrachten Methylolgruppen, deren Anzahl durch f_{A} wiedergegeben wird, in der Regel mindestens 50% durch Gruppen R⁵ verethert, so daß gilt m_{A} ≥ 0,5 × f_{A}, bevorzugt mindestens 55%, besonders bevorzugt mindestens 60% und besonders bevorzugt mindestens 65%.

Es sind in der Regel nicht mehr als 99% durch Gruppen R⁵ verethert, so daß gilt m_{A} ≤ 0,99 × f_{A}, bevorzugt nicht mehr als 95%, besonders bevorzugt nicht mehr als 90 und ganz besonders bevorzugt nicht mehr als 87%.

Bei den oben erwähnten HMMM-Typen können jedoch durchaus alle Methylolgruppen verethert sein, so daß für diese m_{A} = f_{A} gilt.

Es spielt erfindungsgemäß keine Rolle, mit was für einem Festkörpergehalt das eingesetzte Melamin-Formaldehyd-Harz eingesetzt wird. Der Festkörpergehalt kann beispielsweise mindestens 50%, bevorzugt mindestens 60, besonders bevorzugt mindestens 70 und ganz besonders bevorzugt mindestens 75 Gew% betragen.

In der Regel wird der Festkörpergehalt 98% nicht übersteigen und bevorzugt 97% nicht übersteigen.

Der Festkörpergehalt wird gemäß der ISO 3251 bestimmt, indem 2 g des Probematerials und 2 ml n-Butanol flächig ausgebreitet in einem gut belüfteten Trockenschrank für eine Dauer von 2 Stunden auf 125 °C erhitzt werden. Die Probe wird dazu vorher und nachher gewogen, und das Verhältnis gibt den Festkörpergehalt an.

Das eingesetzte Melamin-Formaldehyd-Harz kann mindestens ein Lösungsmittel enthalten, beispielsweise Wasser, C₁-C₄-Alkylalkohole, wie beispielsweise Methanol, Ethanol, iso-Propanol, n-Propanol, n-Butanol, iso-Butanol, sek-Butanol oder tert-Butanol, oder aromatische Kohlenwasserstoffe, wie beispielsweise Toluol oder Xylol-Isomerengemische.

Der Gehalt an freiem Formaldehyd des eingesetzten Melamin-Formaldehyd-Harzes beträgt in der Regel nicht mehr als 1,5 Gew%, beispielsweise kann er nicht mehr als 1,0 Gew%, bevorzugt nicht mehr als 0,6 Gew%, besonders bevorzugt nicht mehr als 0,5 Gew% und ganz besonders bevorzugt nicht mehr als 0,3 Gew% betragen.

Der Gehalt an freiem Formaldehyd insbesondere nicht mehr als 0,2 Gew% und speziell nicht mehr als 0,15 Gew% und in Einzelfällen nicht mehr als 0,1 Gew%.

Der Gehalt an freiem Formaldehyd wird bestimmt gemäß EN ISO 11402.

Über die Harzverteilung gemäß Polymerdefinition gibt die Gelpermeationschromatographie (GPC) und eine GPC-MS-Kopplung aufschluss. Die Harze können Di- und Trimere sowie höhere Oligomere enthalten bis zu einem Massenanteil von 90%.

Die erfindungsgemäße Verbindungen sind durch eine Umsetzung von Melamin-Formaldehyd-Harzen mit carbamatgruppentragenden (Meth)Acrylaten erhältlich, die bevorzugt bei saurem pH-Wert abläuft:
Die Umsetzung findet bei einem pH-Wert von nicht mehr als 6,0 statt, bevorzugt nicht mehr als 5,0, besonders bevorzugt nicht mehr als 4,5, ganz besonders bevorzugt zwischen 1 und 4 und insbesondere zwischen 1 und 3.

Geeignete saure Katalysatoren sind Schwefelsäure, Salpetersäure, Phosphorsäure, Salzsäure, para-Toluolsulfonsäure, Benzolsulfonsäure, Dodecylbenzolsulfonsäure, Methansulfonsäure oder Gemische davon, denkbar sind auch saure Ionenaustauscher. Bevorzugt sind Sulfonsäuren, besonders bevorzugt sind para-Toluolsulfonsäure, Benzolsulfonsäure, Dodecylbenzolsulfonsäure, Methansulfonsäure oder Gemische davon.

Der saure Katalysator wird in der Regel in Mengen von 0,1 bis 10 Gew%, bevorzugt 0,5 bis 7,5, besonders bevorzugt 1 bis 6 und ganz besonders bevorzugt 3 bis 5 Gew% zugegeben. Es kann sinnvoll sein, den Katalysator in mehreren Portionen einzutragen.

Das molare stöchiometrische Verhältnis zwischen der Verbindung der Formel (I) und eingesetzem Melamin-Formaldehyd-Harz (bezogen auf Melamin-Einheiten im Melamin-Formaldehyd-Harz) in der Umsetzung beträgt in der Regel von 10:1 bis 1:1, bevorzugt von 8:1 bis 1,5:1, besonders bevorzugt von 6:1 bis 2:1. Sollte ein Teil der Verbindung der Formel (I) bei der Umsetzung nicht reagieren, so kann diese unreagiert und ohne Abtrennung im Reaktionsgemisch verbleiben und als Reaktivverdünner fungieren.

Es spielt erfindungsgemäß keine wesentliche Rolle, ob die Verbindung der Formel (I) vorgelegt und das Melamin-Formaldehyd-Harz zugegeben wird oder das Melamin-Formaldehyd-Harz in einem Teil der Verbindung der Formel (I) vorgelegt wird und der Rest der Verbindung der Formel (I) kontinuierlich oder portionsweise zugegeben wird oder das Melamin- Formaldehyd - Harz vorgelegt und anschliessend die Verbindung der Formel (I) zugegeben wird.

Die Temperatur in der Umsetzung reicht im allgemeinen von Raumtemperatur bis 150 °C, bevorzugt von 50 bis 130 °C, besonders bevorzugt von 60 bis 120 °C und ganz besonders bevorzugt von 70 bis 100 °C.

Die Reaktionsdauer während der Umetherung beträgt von 10 min bis 6 Stunden.

Das zahlenmittlere Molgewicht Mₙ der erhaltenen erfindungsgemäß modifizierten Melamin-Formaldehyd-Harze beträgt in der Regel weniger als 2000 g/mol, bevorzugt von weniger als 1500 g/mol und besonders bevorzugt von weniger als 1300 auf (bestimmt durch Gelpermeationschromatographie mit Tetrahydrofuran und Polystyrol als Standard, DIN 55672, Teil 1).

In einer bevorzugten Ausführungsform beträgt die Säurezahl der erhaltenen Melamin-Formaldehyd-Harze weniger als 20, besonders bevorzugt weniger als 15 und ganz besonders bevorzugt weniger als 10 mg KOH/g, bestimmt gemäß ISO 3682.

In einer bevorzugten Ausführungsform beträgt die Farbzahl der erhaltenen Melamin-Formaldehyd-Harze weniger als 200, besonders bevorzugt weniger als 150, bestimmt gemäß DIN EN 1557.

Der Gehalt an freiem Formaldehyd gemäß EN ISO 11402 in den erhaltenen Melamin-Formaldehyd-Harzen beträgt in der Regel nicht mehr als 0,5 Gew%, bevorzugt nicht mehr als 0,3 Gew%, besonders bevorzugt nicht mehr als 0,1 Gew% und ganz besonders bevorzugt nicht mehr als 0,05 Gew%.

Das erfindungsgemäß erhaltene modifizierte Melamin-Formaldehyd-Harz kann anschließend mit gängigen Lösungsmitteln vermischt werden.

Beispiele für derartige Lösungsmittel sind aromatische und/oder (cyclo)aliphatische Kohlenwasserstoffe und deren Gemische, halogenierte Kohlenwasserstoffe, Ester, Ether und Alkohole.

Bevorzugt sind aromatische Kohlenwasserstoffe, (cyclo)aliphatische Kohlenwasserstoffe, Alkansäurealkylester, alkoxylierte Alkansäurealkylester und deren Gemische.

Besonders bevorzugt sind ein- oder mehrfach alkylierte Benzole und Naphthaline, Alkansäurealkylester und alkoxylierte Alkansäurealkylester sowie deren Gemische.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 -178 °C), 150 (Siedebereich etwa 182 - 207 °C) und 200 (CAS-Nr. 64742-94-5), sowie die Shellsol®-Marken der Firma Shell. Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 -180 °C, schwer: Siedebereich etwa 225 - 300 °C,) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

Die Dichte bei 20°C gemäß DIN 51757 der Kohlenwasserstoffe kann weniger als 1 g/cm³ aufweisen, bevorzugt weniger als 0,95 und besonders bevorzugt weniger als 0,9 g/cm³.

Der Gehalt an aliphatischen Kohlenwasserstoffen beträgt in der Regel weniger als 5, bevorzugt weniger als 2,5 und besonders bevorzugt weniger als 1 Gew%.

Halogenierte Kohlenwasserstoffe sind beispielsweise Chlorbenzol und Dichlorbenzol oder dessen Isomerengemische.

Ester sind beispielsweise n-Butylacetat, Ethylacetat, 1-Methoxypropylacetat-2 und 2-Methoxyethylacetat, sowie die Mono- und Diacetylester von Ethylenglykol, Diethylenglykol, Triethylenglykol, Propylenglykol, Dipropylenglykol oder Tripropylenglykol, wie beispielsweise Butylglykolacetat. Weitere Beispiele sind auch Carbonate, wie bevorzugt 1,2-Ethylencarbonat, 1,2-Propylencarbonat oder 1,3-Propylencarbonat.

Ether sind beispielsweise Tetrahydrofuran (THF), Dioxan sowie die Dimethyl-, -ethyl- oder -n-butylether von Ethylenglykol, Diethylenglykol, Triethylenglykol, Propylenglykol, Dipropylenglykol oder Tripropylenglykol.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Weiterhin bevorzugt sind n-Butylacetat, Ethylacetat, 1-Methoxypropylacetat-2, 2-Methoxyethylacetat, sowie deren Gemische, insbesondere mit den oben aufgeführten aromatischen Kohlenwasserstoffgemischen.

Derartige Gemische können im Volumenverhältnis 10:1 bis 1:10 erstellt werden, bevorzugt im Volumenverhältnis 5:1 bis 1:5 und besonders bevorzugt im Volumenverhältnis 1:1, wobei gegebenenfalls noch im Reaktionsgemisch der Umetherung enthaltenes Lösungsmittel, insbesondere die Alkohole R⁵OH und R⁶OH nicht mitgerechnet werden..

Bevorzugte Beispiele sind Butylacetat/Xylol, Methoxypropylacetat/Xylol 1:1, Butylacetat/Solventnaphtha 100 1:1, Butylacetat/Solvesso® 100 1:2 und Kristallöl 30/Shellsol® A 3:1.

Alkohole sind beispielsweise Methanol, Ethanol, n-Propanol, iso-Propanol, n-Butanol, sek-Butanol, iso-Butanol, Pentanol-Isomerengemische, Hexanol-Isomerengemische, 2-Ethylhexanol oder Oktanol.

Denkbar, wenn auch weniger bevorzugt, ist Wasser, insbesondere dann wenn es mit anderen organischen Lösungsmitteln als Lösungsvermittler im Gemisch eingesetzt wird.

Der Gehalt der erhaltenen Melamin-Formaldehyd-Harze in den Lösungsmitteln nach Vermischung kann in der Regel bis zu 98 Gew%, bezogen auf die Summe aus Melamin-Formaldehyd-Harz und Lösungsmittel, betragen, bevorzugt bis 95 Gew%, besonders bevorzugt bis 90 Gew%, ganz besonders bevorzugt bis 86 Gew% und insbesondere bis zu 80 Gew%.

Es stellt eine bevorzugte Ausführungsform der vorliegenden Erfindung dar, die erfindungsgemäß erhältlichen modifizierten Melamin-Formaldehyd-Harze in einem Reaktivverdünner herzustellen und/oder nach der Herstellung mit solchen zu vermischen.

Bei solchen Reaktivverdünner handelt es sich um mindestens eine, beispielsweise ein bis drei, bevorzugt ein bis zwei und besonders bevorzugt genau eine Verbindung, die mindestens eine, bevorzugt mindestens zwei radikalisch polymerisierbare, bevorzugt strahlungshärtbare Gruppen aufweist, beispielsweise zwei bis sechs, bevorzugt zwei bis vier und besonders bevorzugt zwei bis drei.

Bevorzugt weisen die Reaktivverdünner eine niedrige Viskosität auf, bevorzugt von weniger als 15000 mPas (bei 25 °C gemäß DIN EN ISO 3219/A.3).

Die Reaktivverdünner weisen ein mittleres Molekulargewicht bis zu 1000, bevorzugt bis zu 750 g/mol auf. Bevorzugt handelt es sich um ein Polyether(meth)acrylat oder um ein (Meth)acrylat eines Di-, Tri- oder Tetraols oder um ein Urethandi(meth)acrylat aus Basis eines Diisocyanats.

Besonders bevorzugte Reaktivverdünner weisen einen Siedepunkt von mehr als 200 °C bei Normaldruck auf.

Bei den Reaktivverdünnern kann es sich beispielsweise um Reaktivverdünner handeln, wie sie allgemein in P.K.T. Oldring (Herausgeber), Chemistry & Technology of UV & EB Formulations for Coatings, Inks & Paints, Vol. II, Chapter III: Reactive Diluents for UV & EB Curable Formulations, Wiley and SITA Technology, London 1997 beschrieben sind.

Beispiele für Reaktivverdünner mit einer radikalisch polymerisierbaren Gruppe sind Acrylsäuremethylester und Methacrylsäuremethylester.

Bevorzugte Reaktivverdünner sind die Diester und Polyester von (Meth)acrylsäure mit Diolen oder Polyolen. Besonders bevorzugt sind Hexandioldiacrylat, Hexandioldimethacrylat, Octandioldiacrylat, Octandioldimethacrylat, Nonandioldiacrylat, Nonandioldimethacrylat, Decandioldiacrylat, Decandioldimethacrylat, Pentaerythrittetraacrylat, Dipentaerythrittetraacrylat, Dipentaerythrittriacrylat, Pentaerythrittetraacrylat, etc. Bevorzugt sind auch die Ester alkoxylierter Polyole, mit α,β-ethylenisch ungesättigten Mono- und/oder Dicarbonsäuren wie z. B. die Polyacrylate oder -methacrylate von im statistischen Mittel drei- bis 20fach, bevorzugt drei- bis 15fach, besonders bevorzugt drei- bis neunfach alkoxyliertem, besonders ethoxyliertem Trimethylolpropan, Glycerin oder Pentaerythrit sowie von Diethylenglykol, Triethylenglykol, Dipropylenglykol oder Tripropylenglykol. Geeignet sind weiterhin die Ester alicylischer Diole, wie Cyclohexandioldi(meth)acrylat und Bis(hydroxymethyl)cyclohexandi(meth)acrylat.

Besonders bevorzugt ist der Reaktivverdünner ausgewählt aus der Gruppe bestehend aus Ethylenglykoldi(meth)acrylat, Diethylenglykoldi(meth)acrylat, Triethylenglykol-di(meth)acrylat, Butandioldi(meth)acrylat, Hexandioldi(meth)acrylat, Trimethylolpropanmono-, di- oder tri(meth)acrylat, Pentaerythritmono-, di-, tri- oder tetra(meth)acrylat und 2,2-Bis-4-(2-hydroxy-3-methacryloxy) phenylpropan.

Es stellt eine weitere Ausführungsform der vorliegenden Erfindung dar, als Reaktivverdünner NCO-Gruppen freie Umsetzungsprodukte aus aliphatischen oder aromatischen Diisocyanaten und (Meth)Acrylsäureestern, die mit Isocyanat reaktive Gruppen, vorzugsweise OH-Gruppen, tragen, einzusetzen. Eingesetzt werden können zum Beispiel Reaktionsprodukte aus aliphatischen oder aromatischen Diisocyanaten und Hydroxyethyl(meth)acrylat, Hydroxypropyl(meth)acrylat oder Hydroxybutyl(meth)acrylat. Als Diisocyanate bevorzugt sind sind 2,4'- und 4,4'-Diphenylmethandiisocyanat (MDI), 2,4-oder 2,6-Toluylendiisocyanat (TDI), Tetramethylendiisocyanat, Hexamethylendiisocyanat, 2,4'- und 4,4'-Methylenbis(cyclo-hexyl)-diisocyanat, Xylylendiisocyanat, Tetramethylxylylendiisocyanat, Dodecyldiisocyanat, Lysinalkylester-diisocyanat, wobei Alkyl für C₁ bis C₁₀ steht, 2,2,4- oder 2,4,4-Tri-methyl-1,6-hexamethylendiisocyanat, 1,4-Diisocyanatocyclohexan, 1,3- oder 1,4-Bis-(isocyanatomethyl)cyclohexan, Triisocyanatotoluol, Isophorondiisocyanat (IPDI), 2-Butyl-2-ethylpentamethylendiisocyanat, 2-Isocyanatopropylcyclohexylisocyanat, 3(4)-Isocyanatomethyl-1-methylcyclohexyl-isocyanat, 1,4-Diisocyanato-4-methylpentan oder und 2- oder 4-Methyl-cyclohexan-1,3-diisocyanat (H-TDI) oder Gemische der vorgenannten Isocyanate.

Besonders bevorzugt sind Umsetzungsprodukte aus aliphatischen Diisocyanaten, wie Tetramethylendiisocyanat, Hexamethylendiisocyanat, 2,4'- und 4,4'-Methylenbis(cyclohexyl)-diisocyanat, Xylylendiisocyanat, Tetramethylxylylendiisocyanat, Dodecyldiisocyanat, Lysinalkylester-diisocyanat, wobei Alkyl für C₁ bis C₁₀ steht, 2,2,4- oder 2,4,4-Trimethyl-1,6-hexamethylendiisocyanat, 1,4-Diisocyanatocyclohexan, 1,3- oder 1,4-Bis-(isocyanatomethyl)cyclohexan, Isophorondiisocyanat (IPDI), 2-Butyl-2-ethylpentamethylendiisocyanat, 2-Isocyanatopropylcyclohexylisocyanat, 3(4)-Isocyanatomethyl-1-methylcyclohexyl-isocyanat, 1,4-Diisocyanato-4-methylpentan oder und 2- oder 4-Methyl-cyclohexan-1,3-diisocyanat (H-TDI) und Hydroxyethyl(meth)acrylat, Hydroxypropyl(meth)acrylat oder Hydroxybutyl(meth)acrylat. Ganz besonders bevorzugt sind Umsetzungsprodukte aus Hexamethylendiisocyanat, Isophorondiisocyanat, 2,2,4- oder 2,4,4-Tri-methyl-1,6-hexamethylendiisocyanat und Hydroxyethylmethacrylat, Hydroxypropylmethacrylat oder Hydroxybutylmethacrylat sowie speziell das Umsetzungsprodukt aus 2,2,4- und/oder 2,4,4-Tri-methyl-1,6-hexamethylendiisocyanat und zwei Äquivalenten Hydroxyethylmethacrylat, bekannt unter dem Trivialnamen Urethandimethacrylat oder UDMA.

Ein weiterer Gegenstand der vorliegenden Erfindung sind Beschichtungsmassen, die enthalten
- mindestens eine strahlungshärtbare Verbindung gemäß der vorliegenden Erfindung,
- gegebenenfalls mindestens einen Reaktivverdünner,
- gegebenenfalls mindestens ein Lösungsmittel,
- gegebenenfalls weitere lacktiypische Additive sowie
- mindestens einen Photoinitiator.

Als weitere lacktypische Additive können beispielsweise Antioxidantien, Stabilisatoren, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil^{®} der Fa. Degussa, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin^{®} -Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Pigmente können ebenfalls enthalten sein. Pigmente sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.

Wird ein Pigment eingesetzt, so ist darauf zu achten, daß entweder die Härtung mit Elektronenstrahlen durchgeführt wird oder daß ein Photoinitiator verwendet wird, der trotz der Pigmentierung durch die eingestrahlte Strahlung aktiviert werden kann, beispielsweise indem der Photoinitiator eine signifikante Absorbanz in einem Wellenlängenbereich aufweist, in dem das Pigment für die eingestrahlte Strahlung ausreichend durchlässig ist. Es stellt eine bevorzugte Ausführungsform der vorliegenden Erfindung dar, kein Pigment zu verwenden und die Beschichtungsmasse in Klarlacken einzusetzen.

Beispiele für Pigmente umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepaßt werden.
Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Sofern die Aushärtung der Beschichtungsmassen nicht mit Elektronenstrahlen, sondern mittels UV-Strahlung erfolgt, ist vorzugsweise wenigstens ein Photoinitiator enthalten, der die Polymerisation ethylenisch ungesättigter Doppelbindungen initiieren kann.

Photoinitiatoren können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen z.B. Mono- oder Bisacylphosphinoxide, wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin® TPO der BASF SE), Ethyl-2,4,6-trimethylbenzoylphenylphosphinat (Lucirin® TPO L der BASF SE), Bis-(2,4,6-trimethylbenzoyl)-phenylphosphinoxid (Irgacure® 819 der Firma Ciba Spezialitätenchemie), Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, tert-Butylanthrachinon, Anthrachinoncarbonysäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-iso-propylthioxanthon, 2,4-Dichlorthioxanthon, Benzoin, Benzoin-iso-butylether, Chloroxanthenon, Benzointetrahydropyranylether, Benzoin-methylether, Benzoin-ethylether, Benzoin-butylether, Benzoin-iso-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Trio-Tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-tert-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Typische Gemische umfassen beispielsweise 2-Hydroxy-2-Methyl-1-phenyl-propan-2-on und 1-Hydroxy-cyclohexyl-phenylketon, Bis(2,6-dimethoxybenzoyl)-2,4,4-trimethylpentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentyl-phosphinoxid und 1-Hydroxy-cyclohexyl-phenylketon, 2,4,6-Trimethylbenzoyldiphenylphosphinoxid und 2-Hydroxy-2-methyl-1-phenyl-propan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenylphosphinoxid.

Bevorzugt unter diesen Photoinitiatoren sind 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, 1-Benzoylcyclohexan-1-ol, 2-Hydroxy-2,2-dimethylacetophenon und 2,2-Dimethoxy-2-phenylacetophenon.

Die Beschichtungsmassen enthalten die Photoinitiatoren vorzugsweise in einer Menge von 0,05 bis 10 Gew.-%, besonders bevorzugt 0,1 bis 8 Gew.-%, insbesondere 0,2 bis 5 Gew.-%, bezogen auf die Gesamtmenge der härtbaren Komponenten.

Die Beschichtungsmitteln können insbesondere in Grundierungen, Füllern, pigmentierten Decklacken und Klarlacken im Bereich Autoreparatur- oder Großfahrzeuglackierung und Flugzeugen eingesetzt werden. Besonders geeignet sind solche Beschichtungsmittel für Anwendungen, in denen eine besonders hohe Applikationssicherheit, Außenwitterungsbeständigkeit, Härte und Flexibilität gefordert werden, wie in der Autoreparatur- und Großfahrzeuglackierung.

Insbesondere werden Beschichtungsmassen, enthaltend die nach dem erfindungsgemäß erhältlichen Mischungen, als oder in Automobilklar- und -decklacke(n) eingesetzt. Weitere bevorzugte Einsatzgebiete sind Can-Coating und Coil-Coating.

Unter "Coil-Coating" versteht man das kontinuierliche Beschichten von Metallbändern mit meist flüssigen Beschichtungsstoffen. Gewalzte Metallbänder werden nach der Herstellung zum Lagern und Transportieren zu Rollen (sogenannten "coils") aufgewickelt. Diese Metallbänder stellen das Ausgangsmaterial für die meisten flächigen metallischen Werkstücke dar, beispielsweise Automobilteile, Karosserieteile, Geräteverkleidungen, Fassadenverkleidungen, Deckenverkleidungen oder Fensterprofile. Dazu werden die geeigneten Metallbleche mittels geeigneter Techniken wie Stanzen, Bohren, Falzen, Profilieren und/oder Tiefziehen ausgeformt. Größere Bauteile, wie beispielsweise Automobilkarosserien werden gegebenenfalls durch Verschweißen mehrerer Einzelteile zusammengefügt.

Zur Beschichtung werden 0,2 bis 2 mm dicke und bis zu 2 m breite Metallbänder mit einer Geschwindigkeit von bis zu 200 m/min durch eine coil-coating-Anlage transportiert und dabei beschichtet. Hierzu können beispielsweise kaltgewalzte Bänder aus weichen Stählen oder Baustählen, elektrolytisch verzinktes Feinblech, feuerverzinktes Stahlband oder Bänder aus Aluminium bzw. Aluminiumlegierungen eingesetzt werden. Typische Anlagen umfassen eine Aufgabestation, einen Bandspeicher, eine Reinigungs- und Vorbehandlungszone, eine erste Lackierstation nebst Einbrennofen und folgender Kühlzone, eine zweite Lackierstation mit Ofen, Kaschierstation und Kühlung sowie einen Bandspeicher und Aufwickler.

Charakteristisch für coil-coatings sind dünne Schichten der Beschichtungsmassen, die eine Trockenschichtdicke von zumeist deutlich unter 80 µm, oftmals unter 60 µm, unter 50 µm und sogar unter 40 µm aufweisen. Zudem werden die Bleche mit hohem Durchsatz verarbeitet, was kurze Verweilzeiten erforderlich macht, also nach Auftragen der Beschichtung eine Trocknung bei erhöhter Temperatur erforderlich macht, um die Beschichtungsmasse schnell belastbar zu machen.

Die Beschichtung der Substrate mit den Beschichtungsmassen erfolgt nach üblichen, dem Fachmann bekannten Verfahren, wobei man eine Beschichtungsmasse oder eine solche enthaltend Lackformulierung auf das zu beschichtende Substrat in der gewünschten Stärke aufbringt und gegebenenfalls trocknet. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen.

Weiterhin wird ein Verfahren zum Beschichten von Substraten offenbart, bei dem man das eine Beschichtungsmasse oder eine solche enthaltende Lackformulierung, gegebenenfalls mit weiteren lacktypischen Additiven und thermisch, chemisch oder strahlungshärtbaren Harzen versetzt, auf das Substrat aufbringt und gegebenenfalls trocknet, mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur und anschließend bei Temperaturen bis zu 160°C, bevorzugt zwischen 60 und 160 °C, besonders bevorzugt zwischen 100 und 160 °C, thermisch behandelt.
Die Strahlungshärtung erfolgt mit energiereichem Licht, z.B. UV-Licht oder Elektronenstrahlen. Die Strahlungshärtung kann bei höheren Temperaturen erfolgen. Bevorzugt ist dabei eine Temperatur oberhalb der Tg des strahlungshärtbaren Bindemittels.

Strahlungshärtung heißt hier die radikalische Polymerisation von polymerisierbaren Verbindungen infolge einer elektromagnetischen und/oder korpuskularen Strahlung, bevorzugt UV-Licht im Wellenlängenbereich von λ=200 bis 700 nm und/oder Elektronenstrahlung im Bereich von 150 bis 300 keV und besonders bevorzugt mit einer Strahlungsdosis von mindestens 80, bevorzugt 80 bis 3000 mJ/cm².

Neben einer Strahlungshärtung können noch weitere Härtungsmechanismen involviert sein, beispielsweise thermische-, Feuchtigkeits-, chemische und/oder oxidative Härtung, bevorzugt thermische und Strahlungshärtung und besonders bevorzugt Strahlungshärtung allein.

Die Beschichtungsmittel können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Spritzen, Spachteln, Rakeln, Bürsten, Rollen, Walzen, Gießen, Laminieren, Hinterspritzen oder Coextrudieren ein- oder mehrfach appliziert werden.

Die Beschichtungsstärke liegt in der Regel in einem Bereich von etwa 3 bis 1000 g/m² und vorzugsweise 10 bis 200 g/m².

Die Trocknung und Aushärtung der Beschichtungen erfolgt im allgemeinen unter normalen Temperaturbedingungen, d.h. ohne Erhitzung der Beschichtung. Die erfindungsgemäßen Mischungen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden. Dies ist begrenzt durch die Thermostabilität des Substrats.

Weiterhin wird ein Verfahren zum Beschichten von Substraten offenbart, bei dem man die Beschichtungsmasse oder solche enthaltende Lackformulierungen, gegebenenfalls mit thermisch härtbaren Harzen versetzt, auf das Substrat aufbringt, trocknet, und anschließend mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur.

Das Verfahren zum Beschichten von Substraten kann auch so durchgeführt werden, daß nach dem Aufbringen der Beschichtungsmasse oder Lackformulierungen zunächst mit Elektronenstrahlen oder UV Belichtung unter Sauerstoff oder bevorzugt unter Inertgas bestrahlt wird, um eine Vorhärtung zu erzielen, anschließend bei Temperaturen bis zu 160 °C, bevorzugt zwischen 60 und 160 °C, thermisch behandelt und anschließend mit Elektronenstrahlen oder UV Belichtung unter Sauerstoff oder bevorzugt unter Inertgas endhärtet.

Gegebenenfalls kann, wenn mehrere Schichten des Beschichtungsmittels übereinander aufgetragen werden, nach jedem Beschichtungsvorgang eine Trocknung und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Trocknung und/oder thermische Behandlung kann auch zusätzlich zur oder anstelle der thermischen Behandlung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Des weiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Geeignete Substrate für die erfindungsgemäßen Beschichtungsmassen sind beispielsweise thermoplastische Polymere, insbesondere Polymethylmethacrylate, Polybutylmethacrylate, Polyethylenterephthalate, Polybutylenterephthalate, Polyvinylidenflouride, Polyvinylchloride, Polyester, Polyolefine, Acrylnitrilethylenpropylendienstryolcopolymere (A-EPDM), Polyetherimide, Polyetherketone, Polyphenylensulfide, Polyphenylenether oder deren Mischungen.

Weiterhin genannt seien Polyethylen, Polypropylen, Polystyrol, Polybutadien, Polyester, Polyamide, Polyether, Polycarbonat, Polyvinylacetal, Polyacrylnitril, Polyacetal, Polyvinylalkohol, Polyvinylacetat, Phenolharze, Harnstoffharze, Melaminharze, Alkydharze, Epoxidharze oder Polyurethane, deren Block- oder Pfropfcopolymere und Blends davon.

Bevorzugt genannt seien ABS, AES, AMMA, ASA, EP, EPS, EVA, EVAL, HDPE, LDPE, MABS, MBS, MF, PA, PA6, PA66, PAN, PB, PBT, PBTP, PC, PE, PEC, PEEK, PEI, PEK, PEP, PES, PET, PETP, PF, PI, PIB, PMMA, POM, PP, PPS, PS, PSU, PUR, PVAC, PVAL, PVC, PVDC, PVP, SAN, SB, SMS, UF, UP-Kunststoffe (Kurzzeichen gemäß DIN 7728) und aliphatische Polyketone.

Besonders bevorzugte Substrate sind Polyolefine, wie z.B. PP(Polypropylen), das wahlweise isotaktisch, syndiotaktisch oder ataktisch und wahlweise nicht-orientiert oder durch uni- oder bisaxiales Recken orientiert sein kann, SAN (Styrol-Acrylnitril-Copolymere), PC (Polycarbonate), PVC (Polyvinylchloride), PMMA (Polymethylmethacrylate), PBT (Poly(butylenterephthalat)e), PA (Polyamide), ASA (Acrylnitril-Styrol-Acrylester-Copolymere) und ABS (Acrylnitril-Butadien-Styrol-Copolymere), sowie deren physikalische Mischungen (Blends). Besonders bevorzugt sind PP, SAN, ABS, ASA sowie Blends von ABS oder ASA mit PA oder PBT oder PC. Ganz besonders bevorzugt sind Polyolefine, PMMA und PVC.

Ganz besonders bevorzugt ist ASA, insbesondere gemäß DE 196 51 350 und der Blend ASA/PC. Bevorzugt ist ebenfalls Polymethylmethacrylat (PMMA) oder schlagzähmodifiziertes PMMA.

Ein weiterhin bevorzugtes Substrat zur Beschichtung mit den erfindungsgemäßen Beschichtungsmassen sind Metalle, die gegebenenfalls mit einem Primer vorbehandelt sein können.

Bei der Art des Metalls kann es sich im Prinzip um beliebige Metalle handeln. Insbesondere handelt es sich aber um solche Metalle oder Legierungen, welche üblicherweise als metallische Konstruktionswerkstoffe eingesetzt werden, und die vor Korrosion geschützt werden müssen.

Insbesondere handelt es sich um Oberflächen von Eisen, Stahl, Zn, Zn-Legierungen, Al oder AI-Legierungen. Es kann sich dabei um die Oberflächen von vollständig aus den besagten Metallen bzw. Legierungen bestehenden Körpern handeln. Die Körper können aber auch nur mit diesen Metallen beschichtet sein und selbst aus andersartigen Materialien bestehen, beispielsweise aus anderen Metallen, Legierungen, Polymeren oder Verbundwerkstoffen. Es kann sich um Oberflächen von Gußteilen, aus verzinktem Eisen oder Stahl handeln. In einer bevorzugten Ausführungsform der vorliegenden Erfindung handelt es sich um Stahloberflächen.

Zn- oder Al-Legierungen sind dem Fachmann bekannt. Je nach dem gewünschten Anwendungszweck wählt der Fachmann Art und Menge von Legierungsbestandteilen aus. Typische Bestandteile von Zink-Legierungen umfassen insbesondere Al, Pb, Si, Mg, Sn, Cu oder Cd. Typische Bestandteile von Aluminium-Legierungen umfassen insbesondere Mg, Mn, Si, Zn, Cr, Zr, Cu oder Ti. Es kann sich auch um Al/Zn-Legierungen handeln, bei denen Al- und Zn in annähernd gleicher Menge vorhanden sind. Mit derartigen Legierungen beschichteter Stahl ist kommerziell erhältlich. Der Stahl kann die üblichen, dem Fachmann bekannten Legierungskomponenten enthalten.

Denkbar ist auch die Anwendung der erfindungsgemäßen Beschichtungsmassen zur Behandlung von verzinntem Eisen/Stahl (Weißblech).

Die erfindungsgemäßen Beschichtungsmassen und Lackformulierungen eignen sich weiterhin zum Beschichten von Substraten wie Holz, Papier, Textil, Leder, Vlies, Kunststoffoberflächen, Glas, Keramik, mineralischen Baustoffen, wie Zement-Formsteine und Faserzementplatten, oder Metallen oder beschichteten Metallen, bevorzugt von Kunststoffen oder Metallen, insbesondere in Form von Folien, besonders bevorzugt Metallen.

Die folgenden Beispiele sollen die Eigenschaften der Erfindung erläutern, ohne sie aber einzuschränken.

### Beispiele

Als "Teile" seien in dieser Schrift, wenn nicht anders angegeben, "Gewichtsteile" verstanden.

Luwipal® 066LF der BASF SE ist ein hoch bis vollständig methylverethertes Melamin-Formaldehyd-Harz mit einem nichtflüchtigen Anteil (gemäß ISO 3251) von 93 - 96 Gew% mit einem geringen Gehalt an freiem Formaldehyd von nicht mehr als 0,3 Gew%. Die Viskosität (ISO 3219 B) beträgt 2,0 - 6,0 Pas bei 23 °C und einer Scherrate D von 41,3 s⁻¹.

Bei HPC-Acrylat handelt es sich um das formale Umsetzungsprodukt von 2-Hydroxypropylcarbamat (Isomerengemisch aus 2-Hydroxy-1-propylcarbamat und 3-Hydroxy-2-propylcarbamat) mit Acrylsäure. Die Reinheit des HPC-Acrylates betrug mindestens 90 Gew%, der Gehalt an unacryliertem 2-Hydroxypropylcarbamat betrug unter 5 Gew%, der Rest waren unumgesetzte Acrylate.

### Erichsen Tiefung und Kratzfestigkeit.

Die Bestimmung der Pendeldämpfung erfolgte analog DIN 53157. Die Pendeldämpfung ist ein Maß für die Härte der Beschichtung. Hohe Werte bedeuten dabei hohe Härte.

Die Ermittlung der Erichsen-Tiefung erfolgte analog DIN 53156. Die Erichsen-Tiefung ist ein Maß für die Flexibilität und Elastizität. Die Angabe erfolgt in Millimeter (mm). Hohe Werte bedeuten hohe Flexibilität.

Die Bestimmung des Restglanzes erfolgte mit dem Scotch-Brite-Test nach Lagerung für 7 Tage im Klimaraum. Im Scotch-Brite-Test wird als Prüfkörper ein 3 x 3 cm großer Siliciumcarbid modifizierter Faservlies (Scotch Brite SUFN, Firma 3M) an einem Zylinder befestigt. Dieser drückt das Faservlies mit einem bestimmten Auflagegewicht an die Beschichtung und wird pneumatisch über die Beschichtung bewegt. Die Wegstrecke der Auslenkung beträgt 7 cm. Nach 10 bzw. 50 Doppelhüben (DH) wird im mittleren Bereich der Beanspruchung der Glanz (Achtfachbestimmung) analog DIN 67530 bei einem Einfallwinkel von 20° gemessen. Der Restglanzwert in Prozent ergibt sich aus dem Verhältnis Glanz nach Belastung gegenüber Anfangsglanz. Hohe Restglanzwerte, also niedrige Werte für den Glanzverlust, bedeuten hohe Kratzfestigkeit.

### Beispiel 1

Darstellung des Melamincarbamathydroxypropylacrylat in Substanz, Normaldruck Zu der gut gemischten Vorlage aus 65,1 g Luwipal 66, 173,17 g HPC-Acrylat und 0,1732 g Methylhydrochinon werden bei Raumtemperatur 1,19 g Methansulfonsäure zugegeben. Unter Durchperlen von Luft wird bis zu einer Außentemperatur von 90°C erwärmt. Ab einer Innentemperatur von 85°C beginnt die Methanol-Destillation. Nach beendeter Reaktion erhält man ein hochviskoses Produkt mit einer Doppelbindungsdichte von 4,11 mol/kg.

### Beispiel 2

### in Substanz, verminderter Druck

Zu der gut gemischten Vorlage aus 65,1 g Luwipal 66, 173,17 g HPC-Acrylat und 0,1732 g Methylhydrochinon werden bei Raumtemperatur 1,19 g Methansulfonsäure und 0,012 g Phenothiazin zugegeben. Bei einem Druck von etwa 300 mbar wird bis zu einer Außentemperatur von 90°C erwärmt. Ab einer Innentemperatur von 65°C beginnt die Methanol-Destillation. Nach beendeter Reaktion erhält man ein hochviskoses Produkt mit einer Doppelbindungsdichte von 4,08 mol/kg.

### Beispiel 3

### Verdünnung mit HDDA

Zu der gut gemischten Vorlage aus 52,1 g Luwipal 66, 138,5 g HPC-Acrylat und 0,01 g Phenothiazin werden bei Raumtemperatur 1,9 g Methansulfonsäure zugegeben. Bei einem Druck von etwa 300 mbar wird bis zu einer Außentemperatur von 90°C erwärmt. Ab einer Innentemperatur von 69°C beginnt die Methanol-Destillation. Nach beendeter Reaktion wird der Ansatz durch Zugabe von 47,7 g Hexandioldiacrylat auf einen Feststoffgehalt von 80% verdünnt.

### Beispiel 4

### Verdünnung mit BuAc

Zu der gut gemischten Vorlage aus 52,1 g Luwipal 66, 138,5 g HPC-Acrylat und 0,01 g Phenothiazin werden bei Raumtemperatur 1,9 g Methansulfonsäure zugegeben. Bei einem Druck von etwa 300 mbar wird bis zu einer Außentemperatur von 90°C erwärmt. Ab einer Innentemperatur von 69°C beginnt die Methanol-Destillation. Nach beendeter Reaktion wird der Ansatz durch Zugabe von 47,7 g Butylacetat auf einen Feststoffgehalt von 80% verdünnt.

### Verwendung in UV-härtbaren Beschichtungen

Es wurde eine Formulierung aus 75 Gew% Melamincarbamathydroxypropylacrylat aus Beispiel 1, 25 Gew% Butylacetat und 4% Irgacure® 184 (Ciba Spezialitätenchemie, 1-Hydroxycyclohexyl phenyl keton) hergestellt und
a)
   mithilfe eines Kastenrakels mit 300 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Pendeldämpfung: 189 sec
   Restglanz nach 10DH mit Auflagegewicht 250g: 90,9%
   Restglanz nach 50DH mit Auflagegewicht 250g: 82,6%
b)
   mithilfe eines Kastenrakels mit 400 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Pendeldämpfung: 138 sec
   Restglanz nach 10DH mit Auflagegewicht 250g: 62,3%
   Restglanz nach 50DH mit Auflagegewicht 250g: 60,8%
c)
   mithilfe eines Kastenrakels mit 150 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Erichsentiefung: 1,1 mm
d)
   mithilfe eines Kastenrakels mit 200 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Erichsentiefung: 0,9 mm

Es wurde eine Formulierung aus 80 Gew% Melamincarbamathydroxypropylacrylat (hergestellt nach Beispiel 2), 20 Gew% Butylacetat und 4% Irgacure 184 hergestellt und
a)
   mithilfe eines Kastenrakels mit 300 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Pendeldämpfung: 178 sec
   Restglanz nach 10DH mit Auflagegewicht 250g: 83,2%
   Restglanz nach 50DH mit Auflagegewicht 250g: 70,0%
b)
   mithilfe eines Kastenrakels mit 400 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Pendeldämpfung: 135 sec
   Restglanz nach 10DH mit Auflagegewicht 250g: 54,3%
   Restglanz nach 50DH mit Auflagegewicht 250g: 74,0%
c)
   mithilfe eines Kastenrakels mit 150 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Erichsentiefung: 1,4 mm
d)
   mithilfe eines Kastenrakels mit 200 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Erichsentiefung: 0,9 mm

Es wurde eine Formulierung aus 70 Gew% Melamincarbamathydroxypropylacrylat (hergestellt nach Beispiel 1), 30 Gew% Hexandioldiacrylat und 4% Irgacure 184 hergestellt und
a)
   mithilfe eines Kastenrakels mit 300 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Pendeldämpfung: 174 sec
   Restglanz nach 10DH mit Auflagegewicht 250g: 93,8%
   Restglanz nach 50DH mit Auflagegewicht 250g: 89,6%
b)
   mithilfe eines Kastenrakels mit 400 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Pendeldämpfung: 191 sec
   Restglanz nach 10DH mit Auflagegewicht 250g: 68,3%
   Restglanz nach 50DH mit Auflagegewicht 250g: 32,8%
c)
   mithilfe eines Kastenrakels mit 150 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Erichsentiefung: 0,8 mm
d)
   mithilfe eines Kastenrakels mit 200 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Erichsentiefung: 0,9 mm

Es wurde eine Formulierung aus 50 Gew% Melamincarbamathydroxypropylacrylat (hergestellt nach Beispiel 1), 50 Gew% Hexandioldiacrylat und 4% Irgacure 184 hergestellt und
a)
   mithilfe eines Kastenrakels mit 300 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Pendeldämpfung: 166 sec
   Restglanz nach 10DH mit Auflagegewicht 250g: 95,1%
   Restglanz nach 50DH mit Auflagegewicht 250g: 86,4%
b)
   mithilfe eines Kastenrakels mit 400 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Pendeldämpfung: 192 sec
   Restglanz nach 10DH mit Auflagegewicht 250g: 60,9%
   Restglanz nach 50DH mit Auflagegewicht 250g: 17,1%
c)
   mithilfe eines Kastenrakels mit 150 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Erichsentiefung: 0,8 mm
d)
   mithilfe eines Kastenrakels mit 200 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Erichsentiefung: 1,0 mm

Es wurde eine Formulierung aus 70 Gew% Melamincarbamathydroxypropylacrylat (hergestellt nach Beispiel 2), 30 Gew% Hexandioldiacrylat und 4% Irgacure 184 hergestellt und
a)
   mithilfe eines Kastenrakels mit 300 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Pendeldämpfung: 178 sec
   Restglanz nach 10DH mit Auflagegewicht 250g: 93,7%
   Restglanz nach 50DH mit Auflagegewicht 250g: 85,7%
b)
   mithilfe eines Kastenrakels mit 400 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Pendeldämpfung: 192 sec
   Restglanz nach 10DH mit Auflagegewicht 250g: 68,7%
   Restglanz nach 50DH mit Auflagegewicht 250g: 26,3%
c)
   mithilfe eines Kastenrakels mit 150 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Erichsentiefung: 2,0 mm
d)
   mithilfe eines Kastenrakels mit 200 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Erichsentiefung: 0,8 mm

Es wurde eine Formulierung aus 50 Gew% Melamincarbamathydroxypropylacrylat (hergestellt nach Beispiel 2), 50 Gew% Hexandioldiacrylat und 4% Irgacure 184 hergestellt und
a)
   mithilfe eines Kastenrakels mit 300 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Pendeldämpfung: 168 sec
   Restglanz nach 10DH mit Auflagegewicht 250g: 96,0%
   Restglanz nach 50DH mit Auflagegewicht 250g: 92,5%
b)
   mithilfe eines Kastenrakels mit 400 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Pendeldämpfung: 192 sec
   Restglanz nach 10DH mit Auflagegewicht 250g: 55,3%
   Restglanz nach 50DH mit Auflagegewicht 250g: 12,5%
c)
   mithilfe eines Kastenrakels mit 150 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Erichsentiefung: 0,9 mm
d)
   mithilfe eines Kastenrakels mit 200 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Erichsentiefung: 0,9 mm

Es wurde eine Formulierung aus 96 Gew% Melamincarbamathydroxypropylacrylat (hergestellt nach Beispiel 3) und 4% Irgacure 184 hergestellt und
a)
   mithilfe eines Kastenrakels mit 200 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Pendeldämpfung: 183 sec
   Restglanz nach 10DH mit Auflagegewicht 250g: 78,3%
   Restglanz nach 50DH mit Auflagegewicht 250g: 75,7%
b)
   mithilfe eines Kastenrakels mit 200 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Pendeldämpfung: 216 sec
   Restglanz nach 10DH mit Auflagegewicht 250g: 65,1%
   Restglanz nach 50DH mit Auflagegewicht 250g: 22,5%
c)
   mithilfe eines Kastenrakels mit 100 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Erichsentiefung: 1,5 mm
d)
   mithilfe eines Kastenrakels mit 100 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Erichsentiefung: 2,3 mm

Es wurde eine Formulierung aus 96 Gew% Melamincarbamathydroxypropylacrylat (hergestellt nach Beispiel 4) und 4% Irgacure 184 hergestellt und
a)
   mithilfe eines Kastenrakels mit 200 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Pendeldämpfung: 185 sec
   Restglanz nach 10DH mit Auflagegewicht 250g: 79,8%
   Restglanz nach 50DH mit Auflagegewicht 250g: 73,4%
b)
   mithilfe eines Kastenrakels mit 200 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Pendeldämpfung: 194 sec
   Restglanz nach 10DH mit Auflagegewicht 250g: 65,6%
   Restglanz nach 50DH mit Auflagegewicht 250g: 80,4%
c)
   mithilfe eines Kastenrakels mit 100 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Erichsentiefung: 1,2 mm
d)
   mithilfe eines Kastenrakels mit 100 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Erichsentiefung: 2,2 mm

Es wurde eine Formulierung aus 70 Gew% Melamincarbamathydroxypropylacrylat (hergestellt nach Beispiel 4), 30 Gew% HDDA und 4% Irgacure 184 hergestellt und
a)
   mithilfe eines Kastenrakels mit 200 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Pendeldämpfung: 196 sec
   Restglanz nach 10DH mit Auflagegewicht 250g: 93,3%
   Restglanz nach 50DH mit Auflagegewicht 250g: 81,1 %
b)
   mithilfe eines Kastenrakels mit 200 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Pendeldämpfung: 193 sec
   Restglanz nach 10DH mit Auflagegewicht 250g: 63,8%
   Restglanz nach 50DH mit Auflagegewicht 250g: 29,6%
c)
   mithilfe eines Kastenrakels mit 100 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Erichsentiefung: 1,1 mm
d)
   mithilfe eines Kastenrakels mit 100 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Erichsentiefung: 0,6 mm

Es wurde eine Formulierung aus 50 Gew% Melamincarbamathydroxypropylacrylat (hergestellt nach Beispiel 4), 50 Gew% HDDA und 4% Irgacure 184 hergestellt und
a)
   mithilfe eines Kastenrakels mit 200 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Pendeldämpfung: 187 sec
   Restglanz nach 10DH mit Auflagegewicht 250g: 94,2%
   Restglanz nach 50DH mit Auflagegewicht 250g: 90,5%
b)
   mithilfe eines Kastenrakels mit 200 µm Spaltbreite auf ein Glassubstrat aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Pendeldämpfung: 186 sec
   Restglanz nach 10DH mit Auflagegewicht 250g: 66,8%
   Restglanz nach 50DH mit Auflagegewicht 250g: 39,0%
c)
   mithilfe eines Kastenrakels mit 100 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Stickstoffatmosphäre mit 1900 mJ/cm2 (Hg-Hochdrucklampe) belichtet. Gehärteter Film:
   Erichsentiefung: 0,8 mm
d)
   mithilfe eines Kastenrakels mit 100 µm Spaltbreite auf Bonderblech aufgebracht. Nach Ablüften des Lösungsmittels (15 Minuten Raumtemperatur, 20 Minuten 80°C) wurde der Film bei Raumtemperatur in einer Luftatmosphäre mit 1900 mJ/cm2 (Hg-Hochdrucklampe) belichtet. Gehärteter Film:
   Erichsentiefung: 1,0 mm

## Patentansprüche

1. Strahlungshärtbare Verbindungen, erhältlich durch Umsetzung mindestens eines Melamin-Formaldehyd-Harzes mit mindestens einer Verbindung der Formel (I), 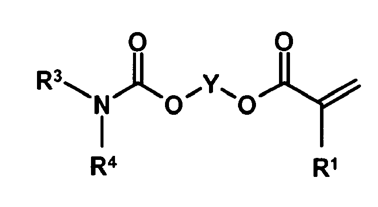 worin
R³, R⁴ unabhängig voneinander Wasserstoff, C₁-C₁₈-Alkyl, C₆-C₁₂-Aryl oder C₅-C₁₂-Cycloalkyl bedeuten,
Y ausgewählt ist unter 1,2-Ethylen, 1,2-Propylen, 1,1-Dimethyl-1,2-ethylen, 1-Hydroxy-methyl-1,2-ethylen, 2-Hydroxy-1,3-propylen, 1,3-Propylen, 1,4-Butylen, 1,6-Hexylen, 2-Methyl-1,3-Propylen, 2-Ethyl-1,3-Propylen, 2,2-Dimethyl-1,3-Propylen und 2,2-Dimethyl-1,4-butylen, oder 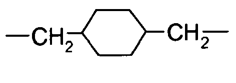 oder 1,2 -, 1,3- oder 1,4-Cyclohexylen,
R¹ Wasserstoff oder Methyl, bevorzugt Wasserstoff bedeutet,
mit der Maßgabe, daß mindestens einer der Reste R³ und R⁴ gleich Wasserstoff ist.

2. Verbindung gemäß Anspruch 1, **dadurch gekennzeichnet, daß** Y 1,2-Ethylen, 1,2-Propylen oder 1,3-Propylen ist.

3. Verbindung gemäß Anspruch 1 oder 2, **dadurch gekennzeichnet, daß** R³ und R⁴ Wasserstoff sind.

4. Verbindung gemäß einem der vorstehenden Ansprüche, **dadurch gekennzeichnet, daß** es sich bei dem Melamin-Formaldehyd-Harz um eine Verbindung der Formel
Mel-N₃ FA_{fA} R⁵_{mA} H_{6-fA}
handelt,
worin
Mel-N₃ einen durch gedankliche Abstraktion der sechs an die Aminogruppen gebundenen Wasserstoffatome in Melamin entstehenden Melaminrest,
FA eine Gruppe -CH₂-O-,
R⁵ eine C₁-C₈-Alkylgruppe bedeuten und
f_{A} kann beliebige Werte von 3,6 bis maximal 6,0 einnehmen
m_{A} Werte von mindestens 2,0 bis f_{A} sein kann.

5. Verbindung gemäß Anspruch 4, **dadurch gekennzeichnet, daß** R⁵ ausgewählt ist aus der Gruppe bestehend aus Methyl, Ethyl und Butyl.

6. Beschichtungsmassen, enthaltend
- mindestens eine strahlungshärtbare Verbindung gemäß einem der vorstehenden Ansprüche,
- gegebenenfalls mindestens einen Reaktivverdünner,
- gegebenenfalls mindestens ein Lösungsmittel,
- gegebenenfalls weitere lacktiypische Additive sowie
- mindestens einen Photoinitiator.

7. Verwendung von Beschichtungsmitteln gemäß Anspruch 6 in Grundierungen, Füllern, pigmentierten Decklacken und Klarlacken im Bereich Autoreparatur- oder Großfahrzeuglackierung und Flugzeugen.

8. Verfahren zur Herstellung von Verbindungen gemäß einem der Ansprüche 1 bis 4, **dadurch gekennzeichnet, daß** man mindestens ein Melamin-Formaldehyd-Harz mit mindestens einem carbamatgruppentragenden (Meth)Acrylat bei saurem pH-Wert umsetzt.

9. Verfahren gemäß Anspruch 8, **dadurch gekennzeichnet, daß** man die Umsetzung in Gegenwart mindestens eines Reaktivverdünners durchführt.

## Claims

1. A radiation-curable compound obtainable by reacting at least one melamine-formaldehyde resin with at least one compound of the formula (I), 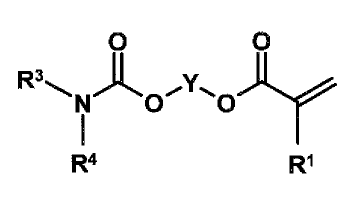 in which
R³ and R⁴ independently of one another are hydrogen, C₁-C₁₈ alkyl, C₆₋C₁₂ aryl or C₅-C₁₂ cycloalkyl,
Y is selected from 1,2-ethylene, 1,2-propylene, 1,1-dimethyl-1,2-ethylene, 1-hydroxymethyl-1,2-ethylene, 2-hydroxy-1,3-propylene, 1,3-propylene, 1,4-butylene, 1,6-hexylene, 2-methyl-1,3-propylene, 2-ethyl-1,3-propylene, 2,2-dimethyl-1,3-propylene, and 2,2-dimethyl-1,4-butylene, or 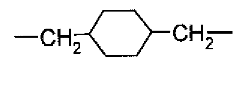 or 1-, 1,3- or 1,4-cyclohexylene,
R¹ is hydrogen or methyl, preferably hydrogen,
with the proviso that at least one of the radicals R³ and R⁴ is hydrogen.

2. A compound according to claim 1, wherein Y is 1,2-ethylene, 1,2-propylene or 1,3-propylene.

3. A compound according to claim 1 or 2, wherein R³ and R⁴ are hydrogen.

4. A compound according to any of the preceding claims, wherein the melamine-formaldehyde resin is a compound of the formula
Mel-N₃ FA_{fA} R⁵_{mA} H_{6-fA}
in which
Mel-N₃ is a melamine radical formed by imaginary abstraction of the six hydrogen atoms attached to the amino groups in melamine,
FA is a group -CH₂-O-,
R⁵ is a C₁-C₈ alkyl group,
f_{A} can adopt any desired values from 3.6 to a maximum of 6.0, and
m_{A} can be values from at least 2.0 to f_{A}.

5. A compound according to claim 4, wherein R⁵ is selected from the group consisting of methyl, ethyl, and butyl.

6. A coating composition comprising
- at least one radiation-curable compound according to any of the preceding claims,
- if desired, at least one reactive diluent,
- if desired, at least one solvent,
- if desired, further, typical coatings additives, and
- at least one photoinitiator.

7. The use of a coating material according to claim 6 in a primer, surfacer, pigmented topcoat material or clearcoat material in the field of automotive refinish, large-vehicle finishing or aircraft.

8. A process for preparing a compound according to any of claims 1 to 4, which comprises reacting at least one melamine-formaldehyde resin with at least one (meth)acrylate bearing carbamate groups, at acidic pH.

9. The process according to claim 8, wherein the reaction is conducted in the presence of at least one reactive diluent.

## Revendications

1. Composés durcissables par rayonnement, pouvant être obtenus par mise en réaction d'au moins une résine mélamine-formaldéhyde avec au moins un composé de formule (I) 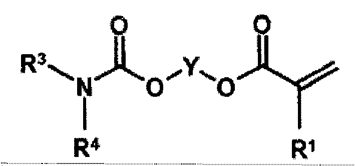 dans laquelle
R³, R⁴ signifient indépendamment l'un de l'autre hydrogène, alkyle en C₁-C₁₈, aryle en C₆-C₁₂ ou cycloalkyle en C₅-C₁₂,
Y est choisi parmi 1,2-éthylène, 1,2-propylène, 1,1-diméthyl-1,2-éthylène, 1-hydroxy-méthyl-1,2-éthylène, 2-hydroxy-1,3-propylène, 1,3-propylène, 1,4-butylène, 1,6-hexylène, 2-méthyl-1,3-propylène, 2-éthyl-1,3-propylène, 2,2-diméthyl-1,3-propylène et 2,2-diméthyl-1,4-butylène ou 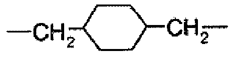 ou 1,2-, 1,3- ou 1,4-cyclohexylène,
R¹ signifie hydrogène ou méthyle, de préférence hydrogène,
à condition qu'au moins un des radicaux R³ et R⁴ soit l'hydrogène.

2. Composé selon la revendication 1, **caractérisé en ce qu'**Y est le 1,2-éthylène, le 1,2-propylène ou le 1,3-propylène.

3. Composé selon la revendication 1 ou 2, **caractérisé en ce que** R³ et R⁴ sont l'hydrogène.

4. Composé selon l'une quelconque des revendications précédentes, **caractérisé en ce que** la résine mélamine-formaldéhyde est un composé de formule
Mel-N₃ FA_{fA} R⁵_{mA} H_{6-fA}
dans laquelle
Mel-N₃ signifie un radical mélamine formé par abstraction mentale des six atomes d'hydrogène reliés aux groupes amino dans la mélamine,
FA signifie un groupe -CH₂-O-,
R⁵ signifie un groupe alkyle en C₁-C₈, et
f_{A} peut prendre des valeurs quelconques de 3, 6 à au plus 6, 0,
m_{A} peut représenter des valeurs d'au moins 2,0 à f_{A}.

5. Composé selon la revendication 4, **caractérisé en ce que** R⁵ est choisi dans le groupe constitué par méthyle, éthyle et butyle.

6. Compositions de revêtement, contenant :
- au moins un composé durcissable par rayonnement selon l'une quelconque des revendications précédentes,
- éventuellement au moins un diluant réactif,
- éventuellement au moins un solvant,
- éventuellement d'autres additifs usuels pour les laques, ainsi que
- au moins un photoinitiateur.

7. Utilisation d'agents de revêtement selon la revendication 6 dans des couches de fond, des charges, des couches de surface pigmentées et des vernis dans le domaine de la peinture de réparation automobile ou de véhicules de grande taille et des avions.

8. Procédé de fabrication de composés selon l'une quelconque des revendications 1 à 4, **caractérisé en ce qu'**au moins une résine mélamine-formaldéhyde est mise en réaction avec au moins un (méth)acrylate portant des groupes carbamate à un pH acide.

9. Procédé selon la revendication 8, **caractérisé en ce que** la réaction est réalisée en présence d'au moins un diluant réactif.
